# EUROPÄISCHE PATENTSCHRIFT

(11) **EP 1 162 112 B1**
(45) Veröffentlichungstag und Bekanntmachung des Hinweises auf die Patenterteilung: **23.08.2006**
(21) Anmeldenummer: 00112429.6
(22) Anmeldetag: 09.06.2000
(51) Int. Cl.: B60P 7/08

(54) **Anker zum Befestigen oder Verzurren einer Last an einer Trägerplatte**
Anchor for fixing of a load on a support plate
Attache pour la fixation d'une charge à une plaque de porteur

(43) Veröffentlichungstag der Anmeldung: 12.12.2001
(73) Patentinhaber: Sortimo Speedwave GmbH, 86441 Zusmarshausen (DE)
(72) Erfinder: Specker, Thomas, 89415 Lauingen (DE)
(74) Vertreter: Zipse + Habersack

(56) Entgegenhaltungen:
- DE-A- 3 837 408
- FR-A- 2 411 328
- US-A- 2 622 298
- US-A- 2 895 430
- US-A- 3 300 171

## Beschreibung

Die Erfindung betrifft einen Anker gemäß dem Oberbegriff des Anspruchs 1 zum Befestigen oder Verzurren einer Last an einer Trägerplatte.

Im Stand der Technik zeigt die gattungsbildende US 2,622,298 einen Befestigungsanker zum Verzurren einer Last. Die Vorrichtung umfasst einen Anker mit einem Bolzen, der in eine Buchse einer Trägerplatte einsteckbar ist. In dem Bolzen sind verschwenkbare Backen angeordnet, die über einen Federmechanismus beim Einschieben des Bolzens in die Trägerplatte dort verrasten. Ein seitlich angeordneter Stift wirkt auf die Feder, derart, dass beim Eindrücken des Stiftes der Anker aus der Trägerplatte dearretiert und entnommen werden kann.

Es gibt die vielfältigsten Einsatzgebiete, wo an einem beliebigen Punkt auf einer Fläche eine Last aufgenommen werden soll. Als Beispiel sei genannt eine Boden- oder Trägerplatte in einem Fahrzeug oder Flugzeug, wo Verankerungspunkte zum Verzurren einer Ladung benötigt werden. Üblicherweise werden solche Verzurranker fest mit der Boden- oder Trägerplatte verbunden, was den Nachteil hat, dass sie bei Nichtgebrauch stören. Es ist auch bekannt, Schraubanker zu verwenden, die aber Gewindebohrungen in der Boden- oder Trägerplatte erfordern. Außerdem bietet ein Gewinde außer bei Metallplatten oder Hartkunststoffplatten nicht die gewünschte Ausreißfestigkeit von z. B. bis zu 2 KN.

Der Erfindung liegt die Aufgabe zugrunde, einen Anker zum Befestigen oder Verzurren einer Last an einer Trägerplatte zu schaffen, welcher Anker einfach und rasch an der Trägerplatte angebracht und, wenn er nicht benötigt wird, gelöst werden kann.

Diese Aufgabe wird mit einem Anker gelöst, wie er durch den Anspruch 1 gekennzeichnet ist. Weiterbildungen der Erfindung sind in den Unteransprüchen beschrieben.

Der Anker nach der Erfindung benötigt in der Trägerplatte an den gewünschten Punkten nur eine gewöhnliche Öffnung wie ein Loch oder eine Bohrung, in welche der Anker hineingesteckt wird. Zur Sicherung gegen Herausziehen weist er einen die Trägerplatte hintergreifenden Schnäppermechanismus auf. Dieser Schnäppermechanismus ist von vorn, d. h. von der Seite des Last-angriffs leicht und problemlos z. B. durch Niederdrücken eines Druckstifts lösbar, so dass der Anker von der Trägerplatte genommen werden kann. Auf diese Weise können leicht Anker dort gesetzt werden, wo sie benötigt werden, während die übrige Fläche der Trägerplatte für die Ladung frei bleibt.

Zweckmäßig sitzt der Ankerbolzen nicht unmittelbar in der Trägerplatte, sondern in einer in der Trägerplatte fixierbaren Buchse z. B. aus einem Hartkunststoff. Diese Buchse kann bündig mit der Plattenoberfläche abschließen. Die Fixierung der Buchse an der Trägerplatte erfolgt vorteilhaft mittels eines Bundes an der Plattenoberseite und einer Schraubmutter an der Plattenunterseite. Die Festigkeit des Buchsenmaterials stellt sicher, dass der Ankerbolzen bei der Last, für die er ausgelegt ist, nicht ausreißt.

Am Lastangriffsende des Ankerbolzens ist zweckmäßig ein Bügel gelagert, an dem einerseits die Last verzurrt werden kann, und der andererseits zum Herausziehen des Ankers bei Nichtgebrauch dient. Eine Angriffsfläche des Druckstifts liegt in der Stirnfläche des Ankerbolzens innerhalb des Bügels, so dass mit einer Hand gleichzeitig der Druckstift zum Lösen des Schnäppermechanismus niedergedrückt und der Ankerbolzen durch Ziehen am Bügel von der Trägerplatte genommen werden kann.

Die Erfindung wird nachfolgend anhand beigefügter Zeichnungen näher beschrieben. Es zeigen
- Figur 1: in perspektivischer Darstellung den Ankerbolzen mit Buchse zur Befestigung in der Trägerplatte im gelösten und im verbundenen Zustand und
- Figur 2: in geschnittener Darstellung und in Explosionsdarstellung die Einzelheiten des Ankerbolzens.

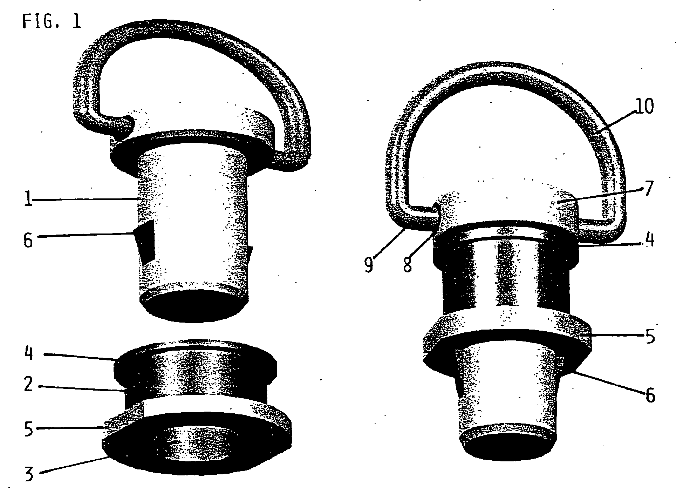

Wie Figur 1 zeigt, setzt sich der Anker zusammen aus dem Ankerbolzen 1 und einer in einer (nicht dargestellten) Trägerplatte fixierbaren Buchse 2. In der Buchse 2 ist eine Öffnung 3 zum Einführen des Ankerbolzens 1 vorgesehen. Die Fixierung der Buchse 2 in der Trägerplatte erfolgt auf der Oberseite mittels eines Bundes 4 und an der Unterseite mittels einer Schraubmutter 5. Der Bund 4 und die Schraubmutter 5 schließen zweckmäßig bündig mit der Plattenober- bzw. -unterseite ab.

Der Ankerbolzen 1 ist an seinem Einsteckende mit einem Schnäppermechanismus 6 versehen, der ihn nach Einführung in die Öffnung 3 der Buchse 2 gegen Herausziehen sichert. Am Lastangriffende besitzt der Ankerbolzen 1 einen Bund 7 zur Anlage am Bund 4 der Buchse 2. Im Bund 7 befindet sich eine Querbohrung 8, in die die Enden 9 eines Bügels 10 eingreifen.

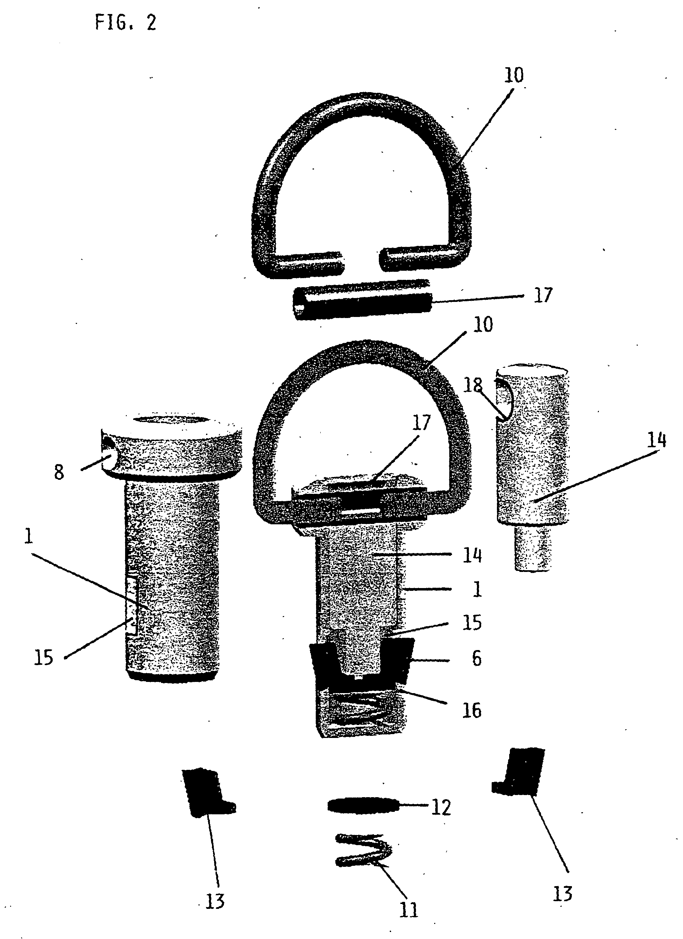

Der Ankerbolzen 1 ist in Figur 2 in seinen Einzelheiten dargestellt. Demnach befindet sich im Bolzen 1 ein Hohlraum, in dessen Innerem der Schnäppermechanismus 6 angeordnet ist. Dieser Schnäppermechanismus 6 besteht von unten nach oben aus einer Feder 11, einem Federteller 12, zwei Backen 13 und einem Druckstift 14. Die Backen 13 sind in seitlichen Fenstern 15 des Bolzens 1 geführt und wippend auf nach außen abfallenden Fensterbänken 16 gelagert. Die Backen 13 werden durch die Feder 11 über den Federteller 12 in die dargestellte Ausschwenkstellung verschwenkt. Der Druckstift 14 greift von oben auf die inneren Schenkel der Backen 13 und durch Niederdrücken des Druckstifts 14 werden die Backen 13 gegen die Kraft der Feder 11 um ihr Fensterbanklager 16 in den Umriß des Bolzens 1 eingeschwenkt.

Der Ankerbolzen 1 kann dann mittels des Bügels 10 aus der Buchse 2 herausgezogen werden.

Der Druckstift 14 benötigt eine Bewegungsbegrenzung nach außen. Diese bildet ein Querstift 17 in der Querbohrung 8, welcher Querstift 17 ein Langloch 18 im Druckstift 14 durchdringt. Das Langloch 18 gibt dem Druckstift 14 ausreichend Bewegungsraum zum Niederdrücken zwecks Lösen des Schnäppermechanismus 6.

Der Ankerbolzen 1 besteht seinerseits zweckmäßig aus Metall wie Aluminium. Es kommt aber auch eine Fertigung in Hartkunststoff in Frage. Die Backen 13 und der Bügel 10 bestehen zweckmäßig aus Stahl.

## Patentansprüche

1. Anker zum Befestigen oder Verzurren einer Last an einer Trägerplatte, mit einem in eine Öffnung der Trägerplatte einsteckbaren Bolzen (1), der zur Sicherung des Bolzens (1) in der Öffnung einen die Trägerplatte hintergreifenden Schnäppermechanismus (6) mit zumindest einem seitlich durch Federkraft ausschwenkbaren Backen (13) aufweist, und mit Mitteln (10) zum Angriff der Last, **dadurch gekennzeichnet, dass** der Schnäppermechanismus (6) durch einen von Hand betätigbaren Druckstift von vorne, also von der Seite des Lastangriffs, gegen die Federkraft lösbar ist.

2. Anker nach Anspruch 1,
**dadurch gekennzeichnet, dass** er eine in der Trägerplatte fixierbare Buchse (2) umfasst, in der ihrerseits die Einstecköffnung (3) für den Bolzen (1) ausgebildet ist.

3. Anker nach Anspruch 2,
**dadurch gekennzeichnet, dass** die Buchse (2) durch einen Bund (4) und eine Schraubmutter (5) and der Trägerplatte fixiert ist.

4. Anker nach Anspruch 2 oder 3,
**dadurch gekennzeichnet, dass** die Buchse (2) aus einem Hartkunststoff besteht.

5. Anker nach Anspruch 1,
**dadurch gekennzeichnet, dass** im Bolzen (1) ein Hohlraum ausgebildet ist, der von unten nach oben eine Feder (11), einen Federteller (12), zwei Backen (13) und den Druckstift (14) aufnimmt.

6. Anker nach Anspruch 5,
**dadurch gekennzeichnet, dass** die Backen (13) in seitlichen Fenstern (15) des Bolzens (1) geführt und wippend auf nach außen abfallenden Fensterbänken (16) gelagert sind.

7. Anker nach einem der vorangehenden Ansprüche,
**dadurch gekennzeichnet, dass** am Lastangriffsende des Bolzens (1) ein Bund (7) ausgebildet und an diesem ein Bügel (10) als Lastangriff angebracht ist.

8. Anker nach Anspruch 7 mit einem der Ansprüche 1 oder 5 bis 6,
**dadurch gekennzeichnet, dass** der Bügel (10) mit seinen Enden (9) in einen Querstift (17) eingreift, der in einer Querbohrung (8) des Bolzenbundes (7) sitzt.

9. Anker nach Anspruch 8,
**dadurch gekennzeichnet, dass** der Druckstift (14) im Bereich des Querstifts (17) ein Langloch (18) aufweist, das im Zusammenwirken mit dem Querstift (17) die Rückstellbewegung des Druckstiftes (14) nach außen begrenzt.

## Claims

1. A tie-down anchor for securing or lashing a consignment to a bed plate, comprising a stud (1) for plugging into an aperture of the bed plate, the stud (1) comprising for locking the stud (1) in the aperture a spring-loaded latch mechanism (6) clasping behind said bed plate by at least one side spring-activated latch dog (13) and with a ring (10) for lashing the consignment, **characterized in that** said spring-loaded latch mechanism (6) is releasable by means of a manually activatable compression pin frontwise, i.e. at the tie-down end, in overcoming the spring force.

2. The anchor as set forth in claim 1,
**characterized by** it comprising a bush (2) for location in said bed plate, in which said plug-in aperture (3) for said stud (1) is configured.

3. The anchor as set forth in claim 2,
**characterized in that** said bush (2) is is located by a sleeve (4) and a nut (5) in said bed plate.

4. The anchor as set forth in claim 2 or 3,
**characterized in that** said bush (2) is made of a hard plastics material.

5. The anchor as set forth in claim 1,
**characterized in that** configured in said stud (1) is a cavity accommodating from the bottom up, a spring (11), a spring plate (12), two latch dogs (13) and a compression pin (14).

6. The anchor as set forth in claim 5,
**characterized in that** said latch dogs (13) are guided into side windows (15) of said stud (1) rockingly located by outwardly downswept window ledges (16).

7. The anchor as set forth in any of the preceding claims,
**characterized in that** at the tie-down end of said stud (1) a sleeve (7) is configured to which a ring (10) is applied for lashing the consignment.

8. The anchor as set forth in claim 7 together with any of the claims 1 or 5 to 6,
**characterized in that** said ring (10) engages by its ends (9) a tubular cross pin (17) seated in a transverse hole (8) of said stud sleeve (7).

9. The anchor as set forth in claim 8,
**characterized in that** said compression pin (14) comprises in the region of said tubular cross pin (17) a slot (18) which in cooperation with said tubular cross pin (17) defines the return movement of said compression pin (14) outwardly.

## Revendications

1. Attache pour la fixation ou l'amarrage d'une charge à une plaque de support comprenant un boulon (1) enfichable dans une ouverture de la plaque de support, qui comporte un mécanisme enclipsable (6) s'agrippant à la plaque de support afin d'arrêter le boulon (1) dans cette ouverture et présentant au moins une mâchoire (13) latéralement orientable par la tension du ressort, ainsi que des moyens (10) pour la saisie de la charge,
**caractérisée par le fait que** le mécanisme enclipsable (6) est détachable par la face avant contre la tension du ressort au moyen d'une tige-poussoir actionnable manuellement, donc par le côté de la saisie de la charge.

2. Attache selon la revendication 1,
**caractérisée par le fait qu'**elle comprend une douille (2) fixable à la plaque de support, à l'intérieur de laquelle est agencée, de son côté, une ouverture d'emmanchement (3) destinée au boulon (1).

3. Attache selon la revendication 2,
**caractérisée par le fait que** la douille (2) est fixée à la plaque de support au moyen d'un collet (4) et d'un écrou fileté (5).

4. Attache selon la revendication 2 ou 3,
**caractérisée par le fait que** la douille (2) est réalisée en matière plastique dure.

5. Attache selon la revendication 1,
**caractérisée par le fait que** dans le boulon (1) est formée une cavité recevant, de bas en haut, un ressort (11), une coupelle de ressort (12), deux mâchoires (13) et la tige-poussoir (14).

6. Attache selon la revendication 5,
**caractérisée par** le fait queles mâchoires (13) sont guidées dans des ouvertures latérales (15) du boulon (1) et montées en bascule sur des rebords d'ouverture (16) inclinés vers l'extérieur.

7. Attache selon l'une quelconque des revendications précédentes,
**caractérisée par le fait que** sur l'extrémité de saisie de la charge du boulon (1) est agencé un collet (7) et qu'un étrier (10) servant à la saisie de la charge est fixé à ce dernier.

8. Attache selon la revendication 7 avec l'une quelconque des revendications 1 ou 5 à 6,
**caractérisée par le fait que** l'étrier (10) s'engage par ses extrémités (9) dans une tige transversale (17) disposée dans une ouverture transversale (8) du collet du boulon (7).

9. Attache selon la revendication 8,
**caractérisée par le fait que** la tige-poussoir (14) présente au niveau de 1a tige transversale (7) un trou oblong (18) limitant, en coopération avec la tige transversale (17), le retour vers l'extérieur de la tige-poussoir (14).
